# EUROPEAN PATENT APPLICATION

(11) **EP 1 522 423 A1**
(43) Date of publication of application: **13.04.2005**
(21) Application number: 03388066.7
(22) Date of filing: 10.10.2003
(51) Int. Cl.: B60B 33/02

(54) **A method and a system for braking rotatable objects**

(71) Applicant: R82 A/S, 8751 Gedved (DK)
(72) Inventor: Moller, Flemming, 8700 Horsens (DK)
(74) Representative: Sundien, Thomas

(57) **Abstract**

The invention relates to a method of completely or partially braking at least one rotatable object, wherein at least one brake device (1) is configured for cooperating with a part for braking the object, said brake device comprising at least one braking means (2), said braking means comprising at least one elongate section (3), and wherein the braking device comprises holder means (7,13,14,29,30,31) for securing the braking means in its activated state by cooperation with the elongate section; and wherein the braking means will, when braking takes place, be pressed directly against the part until a desired load has been reached, and then be secured with the holder means. When the braking means is activated it will thus press directly against the part, without the movement being stopped by a predefined stop, and then the braking means will remain active as it is secured by the holder means.

## Description

The invention relates to a method of completely or partially braking at least one rotatable object, said object comprising or being connected to at least one annularly extending part having the same axis of rotation as the object, wherein at least one brake device is configured for cooperation with the part for braking the object, said brake device comprising at least one braking means.

The prior art in EP 0 388652 teaches a brake for a wheel. The wheel is braked by a bolt being pressed against the outer periphery of the wheel, whereby the friction between wheel and bolt locks the rotation of the wheel. The bolt is activated and deactivated by means of a cam shaft. The cam shaft is configured for being rotated back and forth between two end positions, wherein the bolt is, in the first position spring-biased in a direction away from the wheel and up towards a wave hollow in the cam shaft, and wherein the bolt is, in the second position, pressed down towards the wheel with a plane wave crest on the cam shaft. The wave crest being plane, the plant is stabilised between wave crest and bolt, whereby force is needed to cause the wave crest of the cam shaft to release its contact with the bolt.

EP 0 509786 teaches a wheel brake, wherein the end of a brake rod can be pressed towards the outer periphery of a wheel for locking its rotation. The brake rod is activated and deactivated by means of a handle configured for moving the brake rod between two end positions, in which the brake rod is, in the first position, spring-biased away from the wheel and, in the other position, loaded against the wheel. The document teaches various ways in which the handle can be locked in the activating end position of the brake rod, including by being introduced into a recess perpendicular to the direction of movement of the brake rod.

These prior art wheel brakes will function in many situations; however, they are associated with a number of drawbacks, including that the activated position, ie the position in which the wheel is being locked or is locked, is an end position for the braking means, ie the bolt and the brake rod, respectively. In practice the wheel will have a varying diameter, as it is eg being worn or in case a wheel is concerned that comprises a pressurised medium, in which case the pressure may gradually drop due to eg leak, etc. These conditions will influence the performance of the brakes, since the abutment pressure is, in the end position, dependent on eg the current diameter of the wheel. It is an object of the present invention to remedy this drawback in order to thereby ensure a potent braking effect.

Novel aspects of the method involve that the braking means comprises at least one elongate section, and that the brake device comprises holder means for securing the braking means in its activated state by cooperation with this elongate section; and wherein the braking means is, when braking takes place, pushed directly against that part until a desired load is obtained, and is subsequently secured by the holder means. When the braking means is activated it will thus press directly against that part, irrespective of the dimension of the part and without the movement being stopped by a predetermined stop, since the elongate section enables requisite travelling of the braking means in relation to the holder means. Then the braking means will also remain active as it is secured by the holder means. The braking effect thus is and remains independent of whether the part is being worn or is worn or locally has a smaller expanse, eg due to a defect, or - in case the part is a pumped tyre - independently of the pressure in that tyre. Thus increased security is obtained that an efficient braking effect is indeed obtained.

According to a preferred embodiment of the method, the rotatable object can be a wheel comprising at least one resilient coating, including a tyre or a rubber ring, wherein the braking means is pressed directly against the coating. Hereby the braking effect can be enhanced, since - ia due to the resilience - the braking means will be able to deform the coating to the effect that shape-engaging-like cooperation is established.

According to yet a preferred embodiment of the method, the elongate section may be cylindrical and the holder means may comprise a plate-shaped locking element with an opening configured for cooperation with the elongate section, said opening comprising two rims, and where the braking means is secured by angulation of the plate-shaped locking element and engagement of the rims towards the elongate section. Hereby it is accomplished that the braking means can be secured in any position, the engagement of the rims with the elongate section being possible throughout the entire length thereof.

Novel aspects of a system according to the invention involve that the system comprises at least one wheel and at least one brake device, said wheel comprising or being connected to at least one annuiariy extending part having the same axis of rotation as the wheel, wherein the brake device is configured for cooperation with the part for braking the wheel, and wherein the brake device comprises at least one braking means, said braking means comprising at least one elongate section, and said braking means being configured for being, when braking occurs, pressed directly against the part, and wherein the brake device comprises holder means, said holder means being configured for securing the braking means in the activated state thereof by cooperation with the elongate section. When the braking means is activated, it will thus be pressed directly against the part, irrespective of the dimension of that part, and without the movement being stopped by a predefined stop, and the braking means will subsequently remain active as it is secured by the holder mans. The braking effect thus is and remains independent of eg wear on the wheel or other factors relating to changes in thickness or diameter.

According to a preferred embodiment the elongate section can be cylindrical and have a circular cross section, and the holder means may comprise a plate-shaped locking element, said locking element comprising an opening with two rims of opening, said locking element being configured for cooperation with the elongate section in a manner in which the rims will, by angulation of the locking element in relation to the elongate section, engage the elongate section. Hereby it is accomplished that the braking means can be secured in any position, since the engagement of the rims with the elongate section may take place throughout the entire length thereof.

According to a further preferred embodiment the locking element may, to one side of the opening, be arranged in a journaling and, to another and essentially opposite side of the opening, be spring-biased towards an angled position, in which the elongate section is engaged. Hereby it is accomplished that the braking means will, without other influence, be secured since the locking element is spring-biased towards the position in which the elongate section engages.

According to yet a preferred embodiment the braking means can be spring-biased in a direction away from the wheel. Hereby it is accomplished that when the locking element is moved towards a position in which the elongate section is not engaged, the braking means will relieve its pressure, if any, whereby the braking effect can be released, ie deactivated.

According to a further preferred embodiment the brake device may comprise a release device, said release device comprising means for influencing the locking element towards an orientation, during which orientation the rims of the opening do not engage the elongate section. Hereby the braking effect can be deactivated, since the braking means can be released when the rims do not engage the elongate section.

According to a particularly preferred embodiment, the brake device can be configured for being foot-operated. This position is practical since often wheels are arranged at the floor. When the foot is used the brake device can be activated with the entire body weight, which is a manner in which the majority of people are able to exercise comparatively much force.

According to an alternative embodiment the holder means may comprise at least one spring-biased means and a toothing on the elongate section, where the spring-biased means is configured for forming an engagement with the toothing. In this embodiment a braking effect can be maintained, even during eg powerful vibration; a feature that may be desirable in some situations.

According to yet a preferred embodiment the brake device can be mounted on or at a minimum of one arm, on which arm the wheel is mounted. Hereby a brake device may follow the wheel, including also the situation in which turnable wheels are concerned.

According to yet an embodiment the brake device may be adapted for mounting on an end of a pipe. The brake device can thus be mounted directly on a supporting framework for eg a hospital bed.

According to yet an embodiment the brake device may comprise a turnable journaling for at least one arm, on which arm the wheel is mounted. Thereby it is possible to turn the wheel, while simultaneously the brake device is able to follow the wheel, irrespective of it orientation with respect to turning.

Conveniently the brake device can, according to yet an embodiment, comprise means for locking the turning of the arm.

Novel aspects of a brake device according to the invention involve that it is being configured for complete or partial braking of a wheel, said brake device comprising at least one braking means, said braking means comprising at least one elongate section, and said braking means being configured for being, when braking occurs, pressed directly against a wheel, including the outer periphery of a wheel, eg tyre, rubber ring or the like, and wherein the brake device comprises holder means, said holder means being configured for securing the braking means in its activated state by cooperation with the elongate section. Such brake device is convenient for use on wheel chairs, hospital beds and aids for eg the physically impaired and the like, where reliable braking effect is important.

In the following the invention will be described in further detail by means of figures that exemplify embodiments of the invention:
- Figure 1: shows a system according to the invention, seen from the front;
- Figure 2: shows a section along the line A-A shown in Figure 1;
- Figure 3: shows a brake device in an expioded view;
- Figure 4: shows a brake device seen in an inclined view from above;
- Figure 5: shows one principle of functionality for securing a braking means;
- Figs 6a-d: show one principle of functionality for activating and deactivating a braking means;
- Figure 7: shows one alternative principle of functionality for securing a braking means.

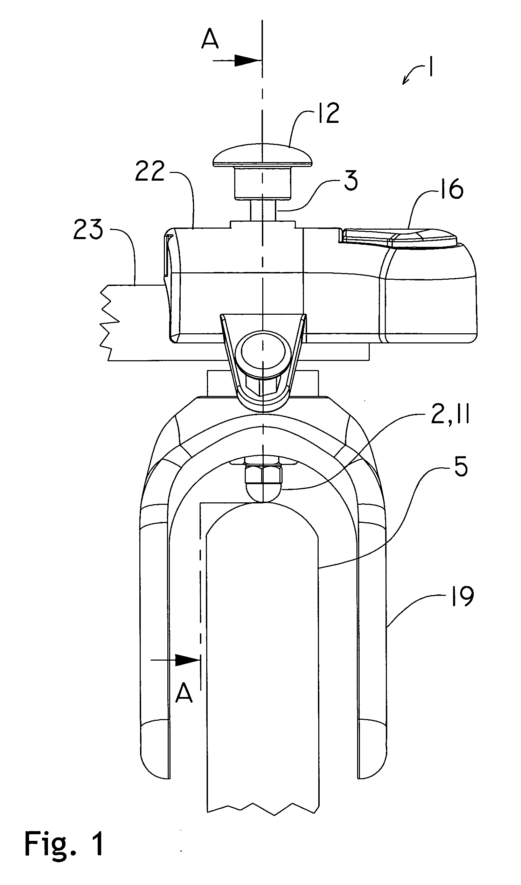

Figure 1 shows a brake device 1 and a wheel 5. Via a not shown connection, the wheel is mounted on arms 19. The brake device 1 comprises a housing 22 secured to one end of a pipe 23. When a cap 12 is influenced an elongate section 3 of a braking means 2 can be pressed towards the wheel 5. On the end that is pressed against the wheel, the braking means 2 can be provided eg with a castle nut that has a rounded and smooth surface that will not damage the wheel. The brake device 1 is provided with a release device 16.

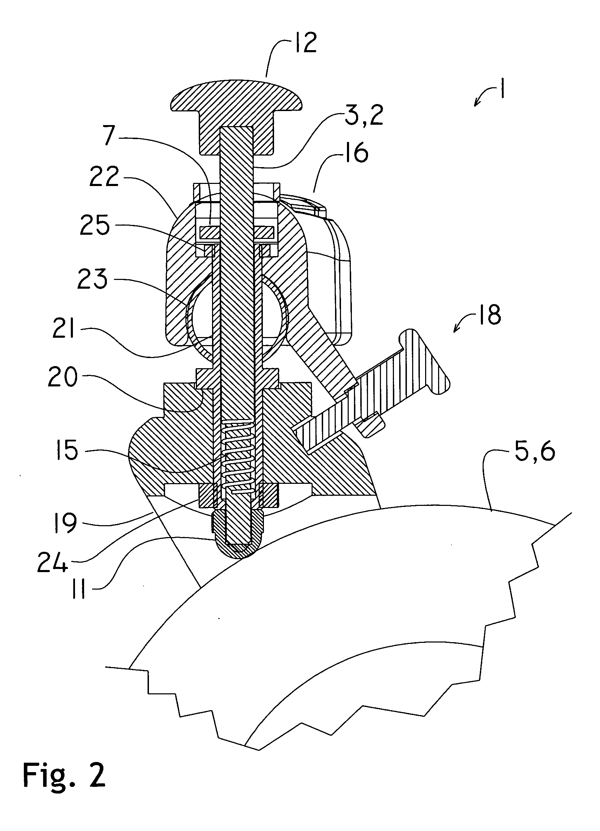

Figure 2 is a sectional view A-A as taught in Figure 1. In the Figure a brake device 1 is shown that has a braking means 2 comprising an elongate section 3 that may preferably be cylindrical with a circular cross section. At the one end of the braking means, it comprises a castle nut 11 and at the other end a cap 12. When the cap 12 is stepped on, the braking means is pressed towards a wheel 5 that may have a resilient coating 6, eg a rubber ring. The brake device comprises a housing 22 that can be mounted on a pipe 23. The wheel 5 is mounted on an arm 19. The braking means 2 is controlled by a bushing 21 which is turnably arranged in the bearing 20, in such a manner that the wheel 5 is able to turn. The bushing 21 is secured by means of nuts 24 and 25. A spring 15 is arranged between the bushing 21 and the braking means 2 in such a manner as to spring-bias it in a direction away from the wheel 5. The brake device 1 also comprises a lock 18 that is able to lock the turning movement of the wheel 5. The lock 18 comprises pin that can be introduced into a recess in the arm 19. The brake device aiso comprises a holder means in the form of a locking element 7 which is configured for cooperation with the braking means 2. The brake device 1 also comprises a release device 16.

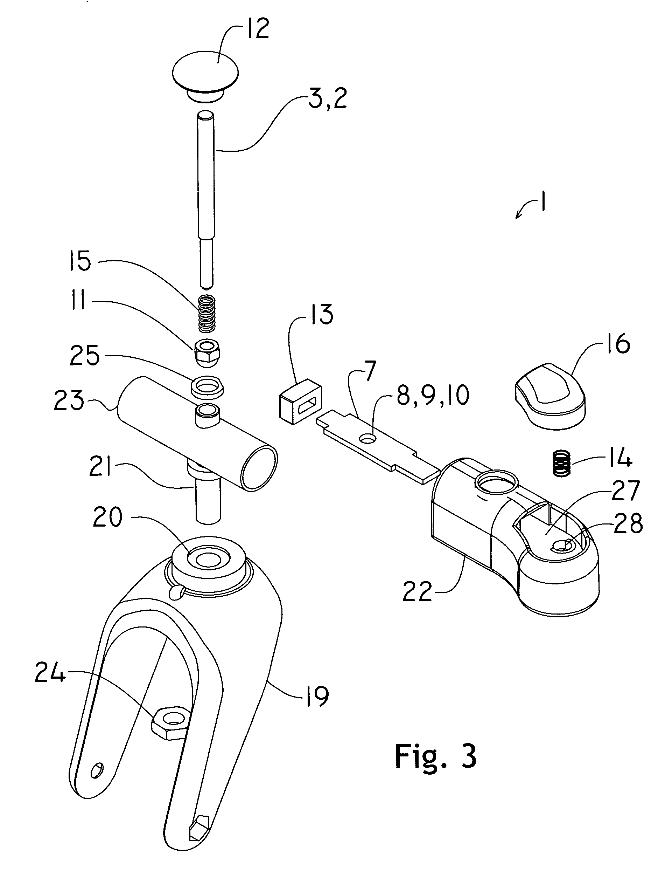

Figure 3 shows a brake device 1 comprising a braking means 2 provided with an elongate section 3. The one end of the braking means 2 is intended for a cap 12 to be mounted thereon. A bushing 21 is configured for controlling the braking means 2 at its elongate section 3. The bushing 21 is intended for being located in a pipe 23 and further in a journaling 20 on arms 19 that are intended for mounting of a not shown wheel thereon. A spring 15 can be displaced over the braking means 2 towards an edge on same. Braking means 2 and spring 15 can be arranged in the bushing 21 and further in the journaling 20, following which the parts can be kept together by mounting of two nuts 24 and 25. A castle nut 11 can then be mounted on an end of the braking means 2. For cooperation with the elongate section 3 of the braking means, a locking element 7 with an opening 8 is arranged such that the section 3 passes through the opening 8. At the opening 8 the locking element 7 has upper and lower opening rims 9 and 10, said opening rims preferably being sharp-edged.

A housing 22 is intended for being mounted on the pipe 23. The pipe 23 can be connected to eg the frame of a hospital bed or a walking frame. The housing 22 is configured for a bushing 13 being mounted thereon, said bushing being configured for serving as a comparatively loose journaling for the locking element 7. Besides, the housing 22 is configured with a recess 27 that is able to contain the locking element 7 and allow it to be angled in relation to the braking means 2. Besides, the recess 27 comprises a bottom opening 28 intended for securing a spring 14 which is intended for pressing that end of the locking element 7 upwards which is opposite the end to be located in the bushing 13. The spring 14 will thereby angle the locking eiement 7 towards a position in reiation to the elongate section 3 in which the opening rims 8 and 10 engage the section 3 and thus secure the braking means 2. A release device 16 can be mounted on the end of the locking element 7, whereby it can be moved opposite the spring force from the spring 14, until the locking element reaches a position in which the opening rims 9 and 10 do not engage the section 3. Hereby the braking means 2 can be released and be freely displaced in relation to the locking element 7.

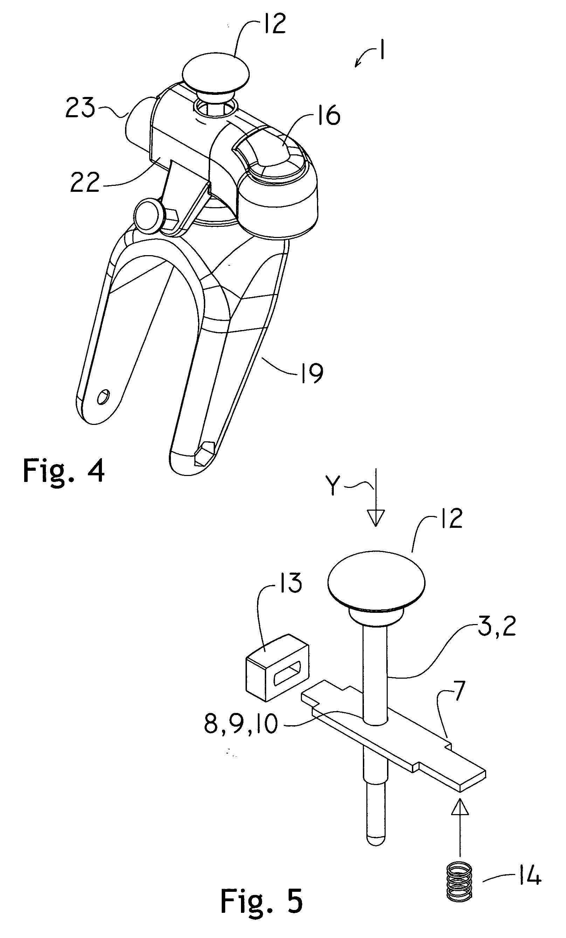

Figure 4 shows a brake device 1 that comprises a housing 22 mounted on a pipe 23, and a cap 12, a release device 16 and arms 19.

Figure 5 shows essential parts of a brake device for providing an overview of the way in which it works, but it will be understood that other components, too, are to be used for securing the parts, eg as shown in Figures 2 and 3. Figure 5 shows a braking means 2 with an elongate section 3 arranged in an opening 8 with opening rims 9 and 10 in a locking element 7. The braking means 2 is provided with a cap 12. The locking element 7 is intended for journaling in a bushing 13, where a spring 14 will tip the locking elment upwards such that the opening rims 9 and 10 engage the section 3. In this situation the braking means 2 will be secured as it is controlled, eg in a manner like that of the bushing 21 shown in Figure 2. Loading of the cap 12 and thus of the braking means 2 in the downwards direction by a force Y, the locking element 7 will tip downwards, ie opposite the spring force until the rim openings 9 and 10 no longer lock the braking means that will subsequently be displaced freely in the downwards direction until it reaches contact with a not shown rotatable object.

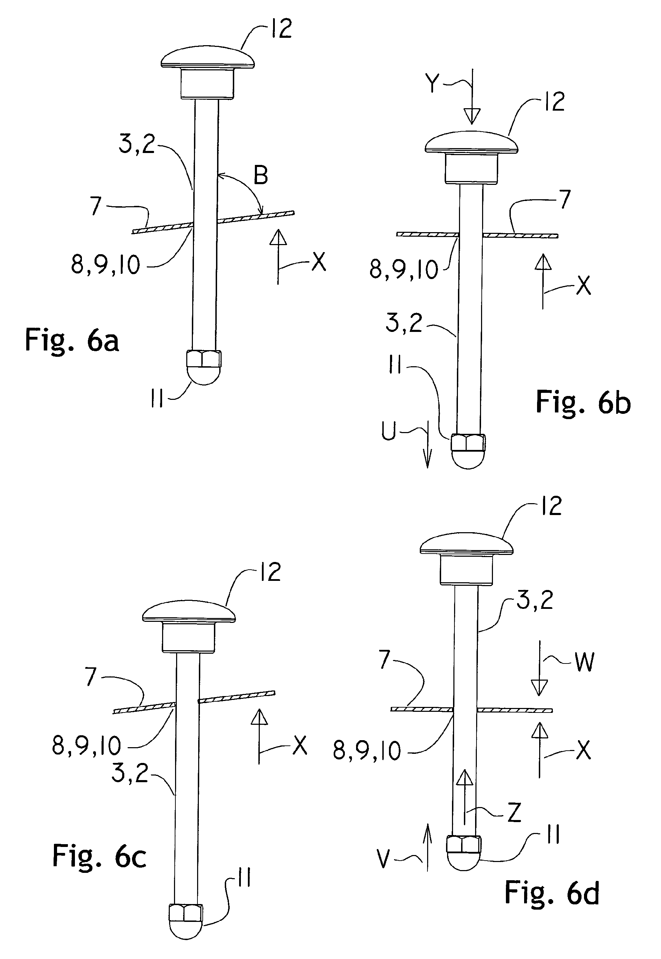

Like Figure 5, Figures 6a-d show a schematic representation of the way in which a brake device works, where other compulsory components are omitted for the sake of overview, including a guide for a braking means and a bearing for a locking element. Figures 6a-d show a braking means 2 with a cap 12 at the one end and a castle nut 11 at the other end intended for being pressed towards a wheel or other rotatable object with a view to complete or partial braking of the object. Besides, a locking element 7 is shown that has an opening 8, said opening comprising two opening rims 9 and 10 intended for cooperation with an elongate section 3 of the braking means 2.

Figure 6a shows a starting situation in which the locking element 7 is angled by an angle B in relation to the section 3, a spring force X pressing the one side of the locking element 7 upwards. Hereby the opening rims 9 and 10 engage the section 3 which is thereby secured. When a braking effect is to be activated, a force Y is applied as shown in Figure 6 to the cap 12 and thus to braking means 2. When the force Y is sufficiently large, the spring force X will be overcome and the locking element 7 tilts downwards towards a situation in which it is approximately perpendicular to the section 3. When the force Y is sufficiently large, the locking element 7 will be tilted downwards until the section 3 is able to slide in relation to the opening rims 9 and 10.

Hereby the braking means 2 is displaced downwards in a direction U, until it directly abuts on a not shown rotatable element, and wherein the force Y can be increased until a desired level is reached. Hereby the braking means 2 is able to brake the rotatable object irrespective of a given insecurity regarding the exact position of the object, including eg the diameter of the outer periphery of the object.

When the force Y is once again removed, the spring force X will yet again tilt the locking element 7 causing it to engage the section 3 and secure the braking means 2 in its position as will appear from Figure 6c. Application of a release force W as shown in Figure 6d that overcomes the spring force X will cause the locking element 7 to tilt downwards until the section 3 is able to slide in relation to the opening rims 9 and 10. In that situation, the braking means 2 can eg be pulled up eg by means of the cap 12 or by means of a spring force Z acting upwardly on the braking means causing it to move in the direction V. Hereby the braking effect is deactivated. The force W may derive from the impact on release device 16, eg as shown in Figure 3. Following deactivation of the braking effect the force W is removed, following which the situation wil be as shown in Figure 6a where the spring force X keeps the locking element 7 spring-biased against a position in which the braking means 2 is secured.

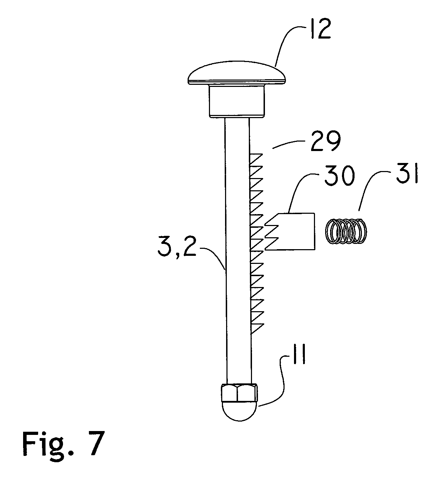

Figure 7 shows a braking means 2 with an elongate section 3, said means being provided with a cap 12 and a castle nut 11. The elongate section 3 is provided with a toothing 29, where a holder means in the form of a latch 30 is configured for cooperating with the section 3. The latch 30 is spring-biased against the toothing 30 by means of a spring 31. Like figures 6a-d, Figure 7 shows a depiction in which several components are omitted for the sake of overview; which depiction may, however, be readily understood the person skilled in the art and implemented. The toothing 29 and the configuration of the latch 30 entail that the braking means 2 can be pressed downwards and thus be pressed towards a not shown rotatable object, the toothing pressing the latch 30 aside. Conversely the braking means cannot be moved in the opposite direction which will be blocked until the latch 30 is caused to disengage, eg by being withdrawn manually or in any other manner.

In the shown embodiments the braking means 2 is pressed towards the outer periphery of the wheel 5, but also other places on the wheel can be used, and, likewise, the braking means is able to act under other angles or orientations than the ones shown, including on the side of the wheel. The braking means 2 may also act on a part that is connected to the wheel, including that the part may be like the disc of a disc brake. In this manner the brake device 1 may also brake several wheels that are secured to a common shaft, wherein there may be located on this shaft eg a disc for cooperating with the brake device.

The wheel 5 may have a resilient coating, but may also have a hard surface. Also the braking means 2 may have a resilient coating. In the embodiments shown at least one rotatable object may be blocked completely or partially, said object comprising or being connected to at least on annularly extending part having the same axis of rotation as the object, wherein at least one brake device 1 is configured for cooperation with the part for braking the object, said brake device 1 comprising at least one braking means 2, said braking means 2 comprising at least one elongate section 3, and wherein the brake device 1 comprises holder means, eg a locking element 7 and a spring 14 or a toothing 29, a latch 30 and a spring 31 for securing the braking means 2 in its activated state by cooperation with the elongate section 3, and wherein the braking means 2 is, when braking takes place, pressed directly against the part until a desired load has been reached, and then it is secured by the holder means.

It will be understood that the invention as described in the present specification and figures can be modified or changed and continue to be within the scope of protection as defined by the below claims.

## Claims

1. A method of completely or partially braking at least one rotatable object, said object comprising or being connected to at least one annular part with the same axis of rotation as the object, wherein at least one brake device (1) is configured for cooperation with the part for braking the object; said brake device comprising at least one braking means (2), said braking means comprising at least one elongate section (3); and wherein the brake device comprises holder means (7, 13, 14, 29, 30, 31) for securing the braking means in its activated state by cooperation with the elongate section; and wherein the braking means is, when braking is taking place, pressed directly against the part until a desired load has been accomplished, and is then secured by the holder means.

2. A method according to claim 1, wherein the rotatable object is a wheel (5) comprising at least one resilient coating (6), inciuding a tyre or a rubber ring, wherein the braking means is pressed directly against the coating.

3. A method according to claim 1 or 2, wherein the elongate section is cylindrical; and wherein the holder means comprise a plate-shape locking element (7) having an opening (8) configured for cooperating with the elongate section, said opening comprising two opening rims (9, 10); and wherein the braking means is secured by angulation of the plate-shaped locking element and engagement of the opening rims towards the elongate section.

4. A system comprising at least one wheel (5) and at least one brake device (1), said wheel comprising or being connected to at least one annularly extending part having the same axis of rotation as the wheel; wherein the brake device is configured for cooperating with the part for braking the wheel; and wherein the braking device comprises at least one braking means (2), said braking means comprising at least one elongate section (3), and said braking means being configured for, when braking takes place, being pressed directly against the part; and wherein the brake device comprises holder means (7, 13, 14, 29, 30, 31 ), said holder means being configured for securing the braking means in its activated state by cooperation with the elongate section.

5. A system according to claim 4, wherein the elongate section is cylindrical and has a circular cross-section; and wherein the holder means comprise a plate-shaped locking element (7), said locking element comprising an opening (8) having two opening rims (9, 10), said locking element being configured for cooperation with the elongate section in such a manner that the rims will, when the locking element is angled in relation to the elongate section, engage the elongate section.

6. A system according to claim 4 or 5, wherein the iocking element is, to one side of the opening, located in a journaling (13), and to another and essentially opposite side of the opening, it is spring-biased towards an angled position, in which the elongate section is engaged.

7. A system according to one or more of claims 4-6, wherein the braking means is spring-biased in a direction away from the wheel.

8. A system according to one or more of claims 4-7, wherein the braking device comprises a release device (16), said release device comprising means for influencing the locking element towards an orientation, during which orientation the rims of the opening do not engage the elongate section.

9. A system according to one or more of claims 4-8, wherein the braking device is configured to be foot-operated.

10. A system according to claim 4 or 9, wherein the holder means comprise at least one spring-biased means (30) and a toothing (29) on the elongate section; and wherein the spring-biased means is configured for forming engagement with the toothing.

11. A system according to one or more of claims 4-10, wherein the brake device is mounted on or at at least one arm (19), on which arm the wheel is mounted.

12. A system according to one or more of claims 4-11, wherein the brake device is adapted for being mounted on an end of a pipe (23).

13. A system according to one or more of claims 4-12, wherein the brake device comprises a turnable journaling for at least one arm, on which arm the wheel is mounted.

14. A system according to claim 13, wherein the brake device comprises means (18) for locking the turning of the arm.

15. A brake device (1) for a system according to one or more of claims 4-14, said brake device being configured for complete and partial braking of a wheel (5), wherein the brake device comprises at least one braking means (2), said braking means comprising at least one elongate section (3), and said braking means being configured for, when braking takes place, being pressed directly against a wheel, including against the outer periphery of a wheel, eg tyre, rubber ring or the like; and wherein the brake device comprises holder means (7, 13, 14, 29, 30, 31), said holder means being configured for securing the braking means in its activated state by cooperation with the elongate section.
